# EUROPEAN PATENT APPLICATION

(11) **EP 2 597 598 A2**
(43) Date of publication of application: **29.05.2013**
(21) Application number: 12193432.7
(22) Date of filing: 20.11.2012
(51) Int. Cl.: G06K 19/08, G06K 19/077, G06K 19/02

(54) **Identification label, particularly for items of clothing, and associated manufacturing machine**

(30) Priority: 24.11.2011 IT MO20110302
(71) Applicant: Tessilgraf - S.r.l., 41012 Carpi (MO) (IT)
(72) Inventor: Allegretti, Tiziano, 41012 CARPI MO (IT)
(74) Representative: Modiano, Micaela Nadia

(57) **Abstract**

An identification label (1), particularly for items of clothing, comprises a radio frequency identification device (5). On its outer surface, the label has an optically detectable distinctive element (6), which represents a first data string related to the item of clothing. The first data string has data in common with a second data string stored in the identification device (5). The second data string, differently from the first data string, is detectable exclusively by radio frequency reading.

## Description

The present invention relates to an identification label, particularly for items of clothing, and to the associated manufacturing machine.

It is known, especially in the clothing sector, to use labels that bear information that is useful for the consumer, such as for example the size, composition, types of washing to which the item of clothing can be subjected, and other useful information for the point of sale, such as for example bar codes that identify immediately the item code through reading performed with an optical reader.

Moreover, it is known to use passive electronic radio frequency identification devices inserted in the label. These labels are normally used as anti-theft devices, since they make it possible to send a signal following a query sent by radio by active anti-theft devices that are proximate to the exit of the point of sale. In case of a regular purchase of the item of clothing, their memory can be reset following the demagnetization performed by the operator by means of adapted equipment and consequently no alarm signal is sent upon the passage of the item of clothing proximate to the anti-theft devices.

These known types of labels are not free from drawbacks, which include the fact that they are only partly reliable, because the operation for demagnetization performed by the operator might not be successful, since said operator does not have electromagnetic checking means to verify that deletion has occurred, with the risk that the buyer, in exiting from the point of sale, is reported acoustically and visually as a thief, which creates considerable embarrassment both on the part of the buyer and on the part of the operator of the point of sale due to the false alarm.

Another drawback of these known types of labels resides in the fact that they require a long time for the identification of the items of clothing to which the label is applied, requiring the optical reading of each individual code that is provided externally on said label.

The aim of the present invention is to provide an identification label, particularly for items of clothing, that obviates the drawbacks and overcomes the limitations of the background art, allowing a fully reliable identification of the items of clothing that are present in the point of sale, discriminating the items for which payment has occurred from potentially stolen items, avoiding false alarms.

Within the scope of this aim, an object of the present invention is to provide a label that allows the identification of items of clothing in a very short time as compared to the time required to identify items with labels of the known type.

A further object of the invention is to provide a label that is capable of giving the greatest assurances of reliability and safety of use, providing a series of additional items of information.

This aim, these objects and others that will become more apparent hereinafter are achieved by an identification label, particularly for items of clothing, comprising at least one radio frequency identification device, **characterized in that** it has, on its outer surface, at least one optically detectable distinctive element, which represents at least one first data string, said first data string having at least part of data in common with a second data string stored in said identification device, said second data string being detectable exclusively by radio frequency reading.

This aim, these objects and others that will become more apparent hereinafter are furthermore achieved by a machine for manufacturing identification labels, particularly for items of clothing, comprising an optical reading sensor for at least one first data string represented by a distinctive element provided on the outer surface of a label, **characterized in that** it comprises at least one radio frequency initialization unit, said initialization unit being adapted to write at least one second data string on a radio frequency identification device accommodated within said label, said second data string having at least part of data in common with said first data string, said optical reading sensor and said initialization unit being connected functionally to a control and management unit.

Further characteristics and advantages will become more apparent from the description of a preferred not exclusive embodiment of an identification label, particularly for items of clothing, and of the corresponding manufacturing machine, illustrated by way of non-limiting example with the aid of the accompanying drawings, wherein:
Figure 1 is a partially sectional view of an identification label, particularly for items of clothing, according to the invention;
Figure 2 is a perspective view of a machine for manufacturing identification labels, according to the invention.

With reference to the cited figures, the identification label, particularly for items of clothing, generally designated by the reference numeral 1, comprises at least one radio frequency identification device 5.

According to the invention, the label 1 has, on its outer surface, at least one distinctive element 6, which can be detected optically and represents at least one first data string related to the item of clothing to which it is connected; said first data string has data in common with a second data string stored in the identification device 5. The second data string, stored in the identification device 5 segregated within a containment chamber 4 that is formed by the adhesion of a first portion 2 and a second portion 3 of the label 1, can be detected exclusively by radio frequency reading by means of adapted devices.

In particular, the distinctive element 6 is shown with one or more symbols of a one-dimensional bar code, such as code 128, code 39, code 93, ITF, or other codes defined by a plurality of mutually parallel bars, or of a two-dimensional bar code, such as for example QR, DataMatrix or other codes defined by a plurality of dots that are present in a given reading area.

In this particular embodiment, the distinctive element 6 is a one-dimensional bar code that identifies an alphanumeric numeral related to the article code of the item of clothing, which advantageously allows its identification within a computerized management system.

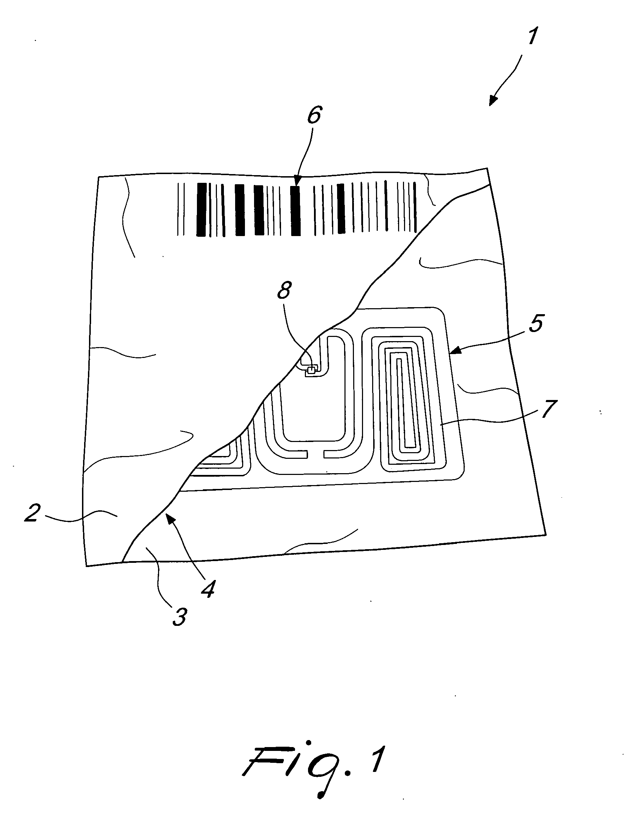

At the same time, the identification device 5 inside the label 1 is an RFID (radio frequency identification) electronic device, which comprises at least one antenna 7 for receiving and transmitting a radio signal and a permanent memory electronic component 8. As shown in Figure 1, the antenna 7, by means of a spiral winding, forms a passive electric circuit, which, if crossed by a given electromagnetic wave, is able to generate electric power according to the principle of induction, supplying power to the electronic component 8, which stores in its own memory the second data string.

In particular, the second data string comprises a plurality of data items, among which there is at least one alphanumeric serial number for unique identification of each label, allowing assured pairing between a given serial number and a specific label 1. The label 1 and in particular the first portion 2 and the second portion 3 are constituted preferably by a fabric formed by a weave of a plurality of weft threads and a plurality of warp threads of at least two different colors. Conveniently, the colors of the threads selected to define the various reading areas of the bar code must have mutual contrast so to facilitate automatic reading of the represented code even by readers that are scarcely sensitive or have a limited reading resolution.

The label 1, manufactured by adapted machines, is completed by a machine 20 that comprises an optical sensor 21 for reading the first data string that is represented by the distinctive element 6 present on the outer surface of the label 1. The particularity of the machine 20 is that it comprises at least one radio frequency initialization unit 22 for writing the second data string on the radio frequency identification device 5 accommodated inside the label 1, said second data string having some data in common with the first data string; both the optical reading sensor 21 and the initialization unit 22 are connected to a control and management unit 23 that coordinates their operation.

In particular, the initialization unit 22 is a substantially directional antenna that defines its range of action in given directions, optimizing the energy received for writing in the identification device 5. Despite this, the dimensions of the various labels 1 might be so limited as to arrange the different identification devices 5 of two different labels 1 close to each other, avoiding the local writing of each individual label 1 with a given serial number and losing the unique association of the first data string with the second data string. To avoid this, there is a shielding mask 25, which comprises a window 26 for the individual viewing of the labels 1. The viewing window 26 separates the optical reading sensor 21 and the initialization unit 22 from the labels 1, allowing the individual exposure of each label 1 to the optical reading sensor 21 and to the initialization unit 22. In order to shield in the best possible way the labels 1 that are contiguous to the label 1 on which writing is to occur, the shielding mask 25 comprises a metal portion that is proximate to the viewing window 26.

The labels 1 are initially mutually continuous, i.e., they are a ribbon 36 of continuous fabric that facilitates their movement on the machine 20 by advancement means 35. In particular, the ribbon 36 unwinds progressively on the machine 20, passing on a gliding surface 27. The shielding mask 25 is engaged detachably on said gliding surface 27 of the labels 1 by means of at least one registration element 28, which allows its precise placement with respect to said gliding surface 27. Indeed, due to the geometric variability of the labels 1, the viewing window 26 must be arranged appropriately with respect to the label 1.

In addition to the registration element 28, the machine 20 has a spacer 32, which is composed mainly of a resting base 33, which is proximate to the gliding surface 27, and a movable arm 34, to which the optical reading sensor 21 is connected mechanically; the spacer 32, and in particular the movable arm 34, allow the spacing of the optical reading sensor 21 from the gliding surface 27, i.e., from the labels 1 that are visible in each instance through the viewing window 26.

In addition, the machine 20 comprises a radio frequency reader 24 for checking the actual correct writing, on the part of the initialization unit 22, of the second data string in the identification device 5 and of a viewing unit 29 that is connected to the control and management unit 23.

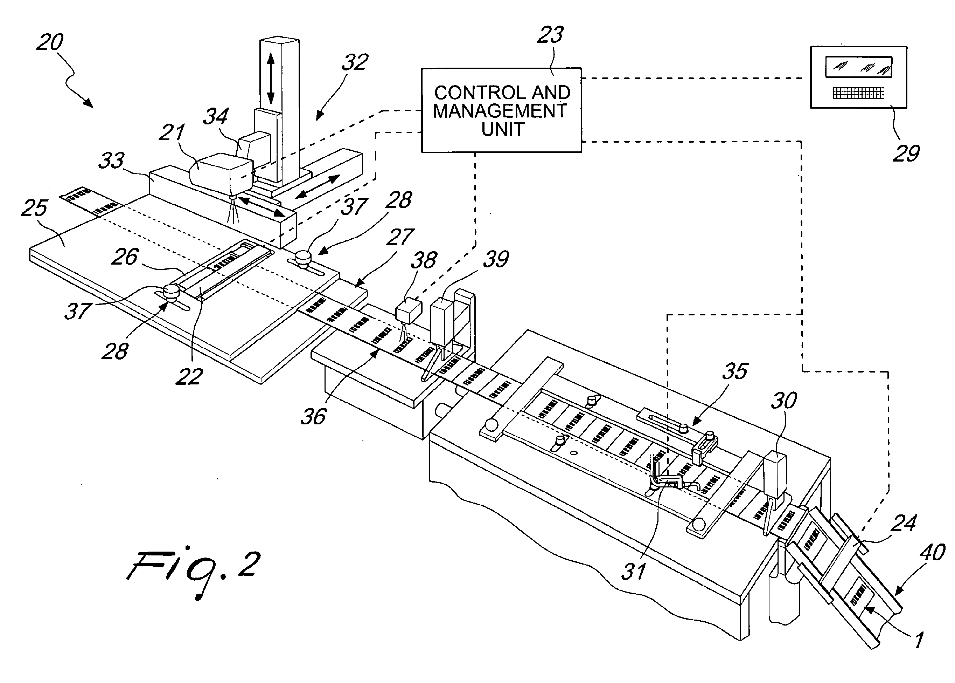

In this particular embodiment, the initialization unit 22 is a dipole antenna that operates in the UHF band with an operating frequency comprised between 800 and 1000 MHz and the ends of which are connected to the edges of the viewing window 26, as shown in Figure 2, while the optical reading sensor 21, which has a high resolution and a high scanning frequency (frequency comprised between 30 and 80 Hz), comprises an autofocus system that operates from a minimum distance of a few millimeters up to 500 mm from the bar code provided on the label 1. Conveniently, the shielding mask 25 is an aluminum plate that has a central slit forming the viewing window 26 and two lateral slits in which the registration element 28, composed of two threaded knobs 37 engaged with the gliding surface 27 by means of their thread, slides. Laterally to the viewing mask 25 the resting base 33 of the spacer 32 is located, which, by means of a frame that can move on three axes, allows easy movement of the movable arm 34 into the desired position.

Downstream of the shielding mask 25 there are an additional optical sensor 38 and a tensioning station 39 that is functionally connected to the advancement means 35. In addition to the tensioning station 39 there is a cutting station 30 for dividing the ribbon 36 into individual labels 1; the cutting station 30 separates from each other, respectively upstream and downstream, the reader 24 of the labels 1 and an optical sensor 31 for detecting the position of the ribbon 36.

In other embodiments, the various devices mentioned might operate at frequencies that are different from the ones mentioned above.

The operation of the machine 20 for manufacturing labels 1 is described hereinafter.

The ribbon 36, comprising a plurality of labels 1, which accommodate inside them respective identification devices 5, is unrolled onto the gliding surface 27 and engaged with the advancement means 35 for its progressive movement from a first end of the machine 20, in which the shielding mask 25 is present, to the opposite end, in which the cutting station 30 is present.

Initially, the operating algorithm of the machine 20 is initialized, in which the match of each individual first data string provided on the label 1 with the second data string that must be written inside the identification device 5 is set. Then the viewing window 26 is positioned, by operating on the knobs 28, so as to allow the viewing of the barcode, i.e., of the distinctive element 6, provided on the ribbon 36, arranged below the shielding mask 25, by the optical reading sensor 21. Conveniently, the distance of the optical reading sensor 21 from the ribbon 36 also is adjusted by operating on the movable arm 34, ensuring an excellent distance for focusing.

By operating the machine 20, the advancement means 35 make the ribbon 36 glide below the shielding mask 25, stopping repeatedly, for a few fractions of a second, when the barcode can be read by the optical reading sensor 21, which, having read the first data string, transmits it to the control and management unit 23, which in turn sends the signal for writing the second data string in the identification device of said label 1 by means of the initialization unit 22. The gliding of the ribbon 36 allows the production of a limited number of labels 1 as a function of their geometry, varying from a minimum of approximately 1500 to a maximum of 5000 labels per hour. The ribbon 36 glides toward the cutting station 30, passing by the additional optical sensor 38, which has an exclusive function of checking for the presence of the ribbon 36, since if said ribbon is not present the sensor 38 sends the machine stop information, stopping the machine 20, and passing through the tensioning station 39, which is activated periodically, pressing the ribbon 36 on the gliding surface 27 whenever the advancement means 35 are inactive, keeping the ribbon 36 under tension.

Then there is the optical position sensor 31, which checks the actual position of the ribbon 36, giving clearance to the subsequent cutting station 30 to cut individually the labels 1 which, by gravity, fall along a slide 40 to arrange themselves in a final collection container. On the first portion of the slide 40 there is the reader 24, which, knowing the exact number of labels 1 between the viewing window 26 and the cutting station 30, checks the second data string written on the identification device 5. If said second data string is not written correctly because it contains errors, the viewing unit 29 reports the error visually on the label 1, allowing the operator to reject the defective label 1.

In other embodiments there can be automatic devices that eliminate the defective labels 1 automatically without requiring the presence of an operator. Conveniently, the initialization unit 22 can have the dual function of writing and subsequently read-checking the second data string.

Moreover, the identification devices 5 can include a unique non-modifiable progressive serial number that is defined by the manufacturer of the identification device itself, increasing the difficulty of reproducing the label 1 and accordingly reducing the possibility of counterfeiting of the final item of clothing, ensuring the certification of the production chain.

Furthermore, the possibility of joining unequivocally the two information items of the label, and consequently making it possible to read the second data string at a distance, makes it possible to define precisely the presence of a given item of clothing in the range of action of a radio frequency reader. This detection allows identifying from a distance the items of clothing for which regular payment has occurred; the payment of the item of clothing following the reading of the bar code, i.e., of the first data string, in fact allows unique identification of the item of clothing and cancellation of its corresponding number from the list of the items of clothing to be checked in order to verify any theft. Advantageously, payment of the item of clothing can also occur by means of the remote reading of the second item of information and by means of the subsequent clearance by the operator or the consumer. In addition, the reading of the second data string linked to the item of clothing allows the identification of multiple items simultaneously by approaching them with a radio frequency reader, greatly reducing the time required to perform an inventory.

Moreover, said label 1 allows interaction with multimedia systems that are present in the point of sale; for example, there can be interactive screens that comprise radio frequency readers which, by detecting in the vicinity the item of clothing with the label 1, allow viewing additional information on the item, such as available sizes and colors and others.

In practice it has been found that the identification label, particularly for items of clothing, according to the present invention, achieves the intended aim and objects, since it allows fully reliable identification of the various items of clothing.

Another advantage of the label according to the invention resides in the fact that it allows an extremely quick identification of the items of clothing, both in the point of sale and in storage warehouses, allowing quick and reliable logistical management of the items of clothing.

Another advantage of the label according to the invention resides in the fact that it ensures a higher degree of reliability as regards checking for counterfeiting, since there can be a non-modifiable identification number that is defined by a third party that certifies the authenticity of the item, ensuring the production chain.

Another advantage of the label according to the invention resides in the fact that it stores multiple items of information that interact with specific devices in order to provide additional information to the customer.

Moreover, the use of the manufacturing machine allows generating the identification labels in short times, associating the second data string with the first data string automatically.

Another advantage of said machine resides in the fact that it manufactures identification labels with reliable data strings, since read checking allows identification of any writing errors.

The identification label, particularly for items of clothing, and the corresponding manufacturing machine, thus conceived, are susceptible of numerous modifications and variations, all of which are within the scope of the accompanying claims.

All the details may furthermore be replaced with other technically equivalent elements.

In practice, the materials used, as long as they are compatible with the specific use, as well as the contingent shapes and dimensions, may be any according to the requirements and the state of the art.

The disclosures in Italian Patent Application no. MO2011A000302, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An identification label (1), particularly for items of clothing, comprising at least one radio frequency identification device (5), **characterized in that** it has, on its outer surface, at least one optically detectable distinctive element (6), which represents at least one first data string, said first data string comprising at least part of data which are in common with a second data string stored in said identification device (5), said second data string being detectable exclusively by radio frequency reading.

2. The label (1) according to claim 1, **characterized in that** it comprises at least one first portion (2) and one second portion (3) which mutually adhere to form a chamber (4) for containing said radio frequency identification device (5).

3. The label (1) according to claim 1, **characterized in that** said distinctive element (6) is illustrated with at least one symbol that belongs to a code selected preferably between a one-dimensional bar code and a two-dimensional bar code.

4. The label (1) according to claim 1, **characterized in that** said identification device (5) is an RFID electronic device.

5. The label (1) according to one or more of the preceding claims, **characterized in that** said second data string comprises at least one alphanumeric serial number for unique identification.

6. The label (1) according to one or more of the preceding claims, **characterized in that** it is constituted by a weave of threads adapted to form a fabric, said weave comprising a plurality of weft threads and a plurality of warp threads of at least two different colors.

7. A machine (20) for manufacturing identification labels (1), particularly for items of clothing, comprising an optical reading sensor (21) for at least one first data string represented by a distinctive element (6) provided on the outer surface of a label (1), **characterized in that** it comprises at least one radio frequency initialization unit (22), said initialization unit (22) being adapted to write at least one second data string on a radio frequency identification device (5) accommodated within said label (1), said second data string comprising at least part of data in common with said first data string, said optical reading sensor (21) and said initialization unit (22) being connected functionally to a control and management unit (23).

8. The machine (20) according to claim 7, **characterized in that** it comprises a radio frequency reader (24) of said second data string, said reader (24) being adapted to check said second data string written by said initialization unit (22) on said identification device (5).

9. The machine (20) according to claims 7 and 8, **characterized in that** it comprises a shielding mask (25) which has a window (26) for the individual viewing of said labels (1), said optical reading sensor (21) and said initialization unit (22), which are proximate to said viewing window (26), being adapted for the individual reading and subsequent writing of each individual label (1), said viewing window (26) separating said optical reading sensor (21) and said initialization unit (22) from said individual label (1).

10. The machine (20) according to the preceding claim, **characterized in that** said shielding mask (25) comprises a metal portion that is proximate to said viewing window (26).

11. The machine (20) according to one or more of the preceding claims 7 to 10, **characterized in that** said shielding mask (25) is engaged detachably with a surface (27) for the gliding of said labels (1), said shielding mask (25) having at least one registration element (28) for positioning with respect to said gliding surface (27).

12. The machine (20) according to one or more of the preceding claims 7 to 11, **characterized in that** it comprises a spacer (32) provided with a resting base (33), which is proximate to said gliding surface (27), and an arm (34) that can move with respect to said resting base (33) and is connected mechanically to said optical reading sensor (21), said spacer (32) being adapted to space said optical reading sensor (21) from said gliding surface (27).

13. The machine (20) according to one or more of the preceding claims 7 to 12, **characterized in that** it comprises a viewing unit (29) which is connected functionally to said control and management unit (23), said viewing unit (29) being adapted to define visually writing errors of said initialization unit (22) on said identification device (5).
